## Europäisches Patentamt
## European Patent Office
## Office européen des brevets

(11) Publication number: **0 014 691**
**B1**

## EUROPEAN PATENT SPECIFICATION

(45) Date of publication of patent specification: **30.12.81**

(51) Int. Cl.³: **A 23 K 1/12**

(21) Application number: **80850010.2**

(22) Date of filing: **24.01.80**

---

(54) **Method and apparatus for treating fibrous plant material.**

---

(30) Priority: **13.02.79 SE 7901240**
**22.05.79 SE 7904449**

(43) Date of publication of application:
**20.08.80 Bulletin 80/17**

(45) Publication of the grant of the European patent:
**30.12.81 Bulletin 81/52**

(84) Designated Contracting States:
**AT BE CH DE FR GB IT LU NL**

(56) References cited:
**DE - A1 - 2 545 222**
**DE - A1 - 2 720 953**
**DE - C - 305 641**

(73) Proprietor: **Wehtje, Fredrik**
**Trolmens Egendom**
**S-530 63 Hällekis (SE)**

(72) Inventor: **Wehtje, Fredrik**
**Trolmens Egendom**
**S-530 63 Hällekis (SE)**

(74) Representative: **Wiklund, Erik et al,**
**AWAPATENT AB Box 5117**
**S-200 71 Malmö (SE)**

---

Courier Press, Leamington Spa, England.

## Method and apparatus for treating fibrous plant material

This invention relates to a method and an apparatus for treating fibrous plant material (such as straw, reed, bagasse, threshed corncobs, forest products, especially hardwood of loose structure, etc.) with aqueous alkali solution, preferably sodium hydroxide solution.

By treatment with alkali, fibrous plant material, such as straw, can be made more useful as animal feed, and the nutritive value of the material significantly increased. Thus the nutritive value of straw used as animal feed can be more than doubled.

Two important effects are realized by treating straw with alkali. On the one hand, the structure of the fibres is influenced in such a way that the animals can better digest and exploit the nutritive substance in the straw and, on the other hand, the appetite of the animals is stimulated by the structure and alkali content of the straw, whereby they consume more feed and production is increased.

The original method of improving the value of the straw is the so-called Beckman method of 1921, which is described in German Patent 305,641. According to this method, straw is soaked for 20 to 24 hours in a 1.5% sodium hydroxide solution, whereupon the straw is repeatedly flushed with fresh water.

This method in its original form is laborious and besides is associated with several other serious drawbacks. One serious drawback is the large water consumption in the flushing of the straw in lye (5,000 to 10,000 litres per 100 kg of dry straw). This disadvantage is the more serious as the available water catchments are· often exploited already to their maximum. In areas with limited water supply a straw soaking method requiring large volumes of water of course cannot even be considered. Another very serious drawback which is associated with this method is that large amounts of polluted waste water must either be discharged with the ensuing risk of interference with the natural environment, or be collected and destroyed, which cannot be made without incurring high costs.

Moreover, a great proportion of the nutritive substances contained in the straw will be lost, which is true of the substances which are soluble in water or in weak alkaline water solution. Not less than 20 to 30% of the dry solids content of the straw are carried along by the flushing water. This heavily biologically active "waste" is a source of serious contamination.

The straw soaking process according to the above described Beckman method thus brings substantial disadvantages, such as a large water consumption, loss of substances which have been leached out of the straw, and a need of discharging large volumes of polluted liquids which comprise both spent treating solutions and washing liquids and may contain alkali residues as well as substances leached out of the straw or particles suspended in the liquid, said liquids being usually discharged into water-courses, resulting in a serious interference with natural environment.

The majority of said disadvantages are eliminated by the straw soaking process disclosed by Swedish Patent 388,111. According to said patent any discharge of polluted treating liquids and washing liquids is avoided by the use of a closed system in which the straw is treated with alkali solutions of different concentration. Thus the straw is first treated by presoaking it with alkaline treating solutions of increasing concentration, whereupon the final treatment is effected with so-called strong lye which has the highest concentration of alkali. Then the straw is post-treated or flushed with alkali solutions of decreasing concentration, use being made as flushing solutions of the solutions earlier employed for the presoaking process. Finally, the straw is flushed with pure water, in which operation only so much pure water is added at the final flushing as is required to replace the liquid absorbed by the straw during the treatment. By this process there is realized a fully closed system in which, compared with earlier systems, the water required is considerably reduced and no discharge of polluting liquids into the environment takes place, at the same time as the treating liquids utilized are exploited in the best manner possible. The method therefore involves great advantages compared with the technique earlier applied in this field.

However, the method disclosed by Swedish Patent 388,111 is also associated with certain limitations; for according to said Swedish patent specification use is made of a plurality of solutions of different alkali concentration, each solution requiring a separate vessel. This implies that the liquid surface in contact with air will be large, which is disadvantageous since the content of carbon dioxide in the air forms carbonates with the alkali in the liquid, whereby alkali is unnecessarily spent. Besides, the alkali solutions are heavily foaming, which entails problems in pumping the solutions between the various vessels. A further disadvantage in the context is that if the capacity is increased beyond a given size, handling of the material will be more complicated at the same time as the requisite work contribution increases, whereby profitability is reduced because of the high labour costs.

The present invention has for its object to provide a new method of treating fibrous plant material, such as straw, with alkali, which process operates on principles which to a certain extent are novel. The process according the present invention is based on the fact that if an alkali solution is supplied to a vessel containing straw and the solution is then allowed to stand, there is formed a concentration gradient in the alkali solution so that the alkali concentration is highest at the bottom of the solution, from where it gradually decreases so as to be lowest at the surface of the solution. Because of this fact, all treating vessels and alkali solutions of varying concentration according to the above Swedish Patent 388,111 have been replaced by a single treating vessel which contains a single treating solution possessing the property of having an upwardly decreasing alkali concentration. According to the invention, use is further made of the own buoyancy of the straw for conveying the straw through the treating solution. During the conveyance of the straw through the treating solution there progressively takes place a neutralization of the solution which contributes to said concentration gradient.

The invention provides a system of small free liquid surface, which results in an insignificant contact between alkali and air, with ensuing insignificant carbonate formation. The carbonate formation is further diminished because the liquid surface in contact with air has the lowest alkali content. Further, the invention entails reduced labour costs compared with prior art lyesoaking processes and a greater possibility of controlling the flushing degree of the plant material treated.

More particularly, the invention provides a method of treating fibrous plant material, such as straw, in which the plant material is treated with aqueous alkali solution and then flushed with water to remove excess alkali, and characteristic of the method is that the plant material by its own buoyancy rises through a column of aqueous alkali solution having an alkali gradient such that the alkali content is highest at the bottom of the column and lowest at the top of said column.

The invention also provides an apparatus for treating fibrous plant material, such as straw, by the above method, said apparatus comprising a substantially vertical container which at its lower part has supply means for supplying plant material and aqueous alkali solution of high concentration and which at its upper part has a closure means for closing the upper end of the container, flushing means for supplying fresh water and flushing water, and conveying means for treated plant material. The apparatus is characterised in that the container between the lower and the upper part thereof is provided with at least one levelling vessel for controlling the liquid level in the container between a lower and an upper position by respectively withdrawal and supply of aqueous alkali solution.

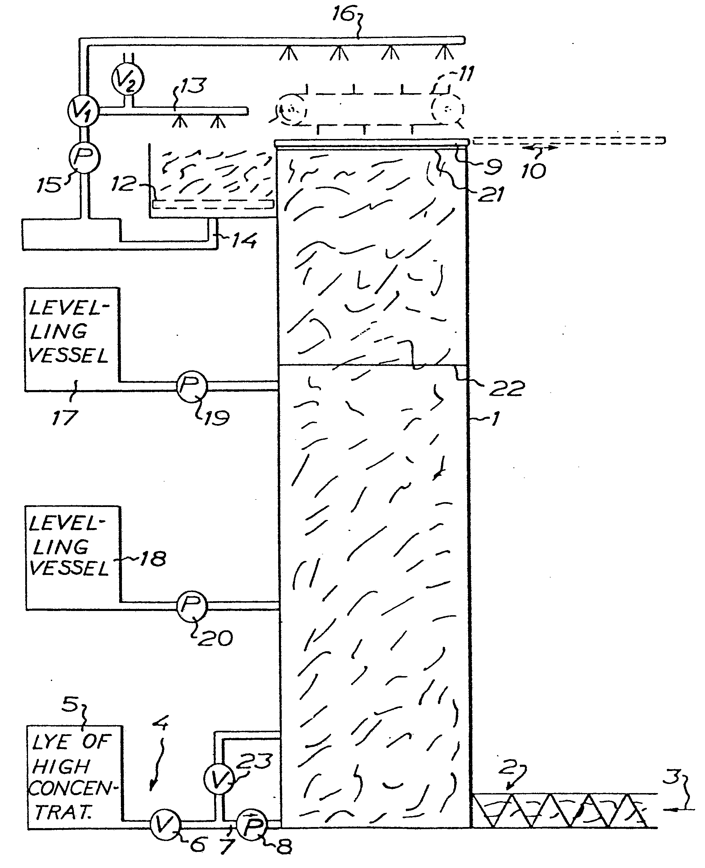

The above and further features of the invention and the advantages gained thereby will be described in greater detail below with reference to the accompanying drawing which diagrammatically shows a preferred apparatus according to the invention.

The apparatus illustrated in the drawing generally consists of a substantially vertical container 1 which at its lower part has supply means 2 for supplying plant material 3, such as straw, and supply means 4 for supplying aqueous alkali solution of high concentration, such as about 30% NaOH. The supply means 4 comprise a container 5 for alkali, such as sodium hydroxide solution, which container is in communication via a valve 6 and a conduit 7 including a pump 8 with the lower part of the container 1. By the aid of the pump 8, alkali solution of high concentration can thus be supplied to the lower part of the container 1 from the container 5 in proportion to the amount of supplied plant material to provide the desired alkali content, such as 1.5 to 3% NaOH, in the lower part of the container 1. Besides, as shown in the drawing, the conduit 7 is preferably formed as a circulation conduit for circulation of liquid in the lower part of the container by means of the pump 8. When such circulation pumping is effected the otherwise closed valve 23 is opened.

The above-mentioned supply means 2 for the plant material can be formed by various per se known means suitable for the supply of plant material. As examples of such supply means there may be mentioned conveying or feed screws which by screw feed force plant material into the lower part of the container 1, as has been indicated in the drawing. The feed screw must be designed with due consideration of the liquid column in the container 1. As an alternative of the feed screw illustrated, use can be made of an inclined feed screw. The feed opening of the screw is arranged on a level above the liquid surface in the container 1 and the screw extends obliquely downwardly into the container through its outer jacket at the lower part of the container. Further, the screw is preferably equipped with a collar or hopper which surrounds the feed opening. The supply means 2 may also be of the type of a sluice valve in which case the plant material is first advanced into a sluice which is closed towards the container 1 but is opened for feeding. Said sluice is then closed on the feed side and opened on the discharge side for discharging the plant material in the sluice into the container 1. Further embodiments of the supply means 2, such as pumps, are readily realized by those skilled in the art.

The aqueous alkali solution of high concentration can be supplied not only separately by means of the supplying means 4, as described above, but also in combination with the supply of the plant material, in which case for example the plant material is conveyed from a vessel containing aqueous alkali solution of high concentration to the container 1 via the supplying means 2.

The container 1 is a vessel of cylindrical or parallelepipedical cross-section and at the upper end has a closure means 9, such as a perforated cover or a grid, for holding down the straw. As an example of the dimensions of a cylindrical container there may be mentioned a diameter of about 1 to 3 m and a height of about 4 to 6 m. The means 9 is removed from the upper end of the container for example by being pushed aside, as is indicated by means of the arrow 10, to the position shown by dash and dot lines. Conveying means 11 for removal of ready-soaked and preflushed plant material is disposed above the upper end of the container. Like the supplying means 2, the conveying means 11 may be a per se known device, such as a chain conveyor with dogs, for example transverse scrapers or pins, or reciprocatory piston-type scraper means.

Further, a pierced or perforated conveyor belt 12 for receiving and carrying away removed, ready-soaked and ready-flushed plant material is arranged at the upper end of the container. Control of the flushing degree of the treated plant material is realized by means of spray nozzles 13 disposed above the belt 12 for flushing away excess alkali by the spraying of fresh water over the plant material. As indicated in the drawing, the conveyor belt is surrounded by side walls and a bottom wall having a drain 14 in which the flushing liquid is collected and led via collection vessel and a pump 15 to spray nozzles 16 which are arranged above the container 1 for preflushing of the ready-soaked plant material in the upper part of the container 1 before it is removed therefrom. As is also indicated in the drawing, the fresh water flushing through the nozzles 13 may be supplemented by a flushing operation with recycled flushing liquid. Adjustment to such flushing with recycled liquid is realized by means of valves $V_1$ and $V_2$ which are adjusted such that flushing liquid from the drain 14 is led via the pump 15 to the nozzles 13 at the same time as the communication with the nozzles 16 and the fresh water supply is closed.

Moreover, at least one levelling vessel 17, 18 is arranged between the upper and the lower part of the container 1 and said vessels are adapted, with the aid of pumps 19, 20, to discharge and supply aqueous alkali solution from and to the container 1, respectively. Said discharge and supply of aqueous alkali solution may also take place by pressure above atmospheric, in which case pressure lines are arranged at the top of each levelling vessel and pressure (compressed air) is supplied to the respective levelling vessel when liquid from the levelling vessel is to be supplied to the container 1, while liquid is discharged from the container 1 by gravity. By making use of pressure above atmospheric instead of pumps for feeding the liquid one avoids any problems deriving from the foaming of the liquid. The purpose of the levelling vessels 17, 18 and the advantages gained thereby as well as the purpose of the remaining details of the apparatus according to the invention will be elucidated in greater detail below in connection with a detailed description of the method of the invention. For the sake of simplicity the method is described with reference to the soaking of straw in lye, but it is realized that the invention also comprises the treatment of other kinds of fibrous plant materials, such as those mentioned in the introduction. Moreover, it should be observed that the term herein used "aqueous alkali solution" is meant to cover all aqueous solutions of alkaline reaction. Among these, however, sodium hydroxide solution (soda lye or solely lye) is preferred because of its easy availability and relatively low cost.

In order that the invention shall be understood as readily as possible the method will be described below after the process has reached its steady state.

In the above-mentioned steady state a ready-soaked and preflushed quantity of straw has been removed from the container 1 and, after lowering of the liquid level slightly below the level 21 by discharge to the levelling vessels 17, 18, the grid 9 has been pushed over the upper end of the container. The liquid level is then raised to the level 21 by reintroduction of liquid from the levelling vessels 17, 18. The straw in the container 1 will now exert an upwardly directed pressure against the grid 9 the purpose of which is to hold down the straw so that the level of the aqueous alkali solution can be adjusted so high that the straw is entirely covered by aqueous alkali solution. The removal of straw and the buoyancy of the straw entail that the remaining straw in the container 1 collects towards the top of the container, while the lowermost part of the container is filled with spent strong lye, so-called black lye, which is substantially free of straw. Fresh straw is fed into the container 1 with the aid of the supply means 2 while the black lye is circulated by means of the pump 8 such that as uniform a distribution and soaking as possible of the supplied straw is obtained. The liquid level in the container 1 is then lowered to the lower level 22 by discharge of liquid to the levelling vessels 17, 18. As a result, the liquid volume devoid of straw in the lower part of the container is diminished and the requisite amount of lye of high concentration is supplied from the container 5 by means of the pump 8. Usually there is only required a small volume to attain the intended degree of concentration of the strong lye, since the lye in the container 5 is of high concentration. After the valve 6 to the container 5 has been closed and the valve 23 opened, circulation pumping of the strong lye by means of the pump 8 is effected for some time. The grid 9 is removed by being pushed aside, as indicated by the arrow 10. After a predetermined treatment time the liquid level in the container 1 is raised towards the level 21 by reintroduction of liquid from the levelling vessels 17 and 18. The uppermost straw layer which has been exposed at the earlier lowering of the liquid level in the container 1, is preflushed with flushing water which is pumped to the spray nozzles 16 from the collecting vessel connected to the pump 15. Then the liquid level in the container 1 is further raised after a predetermined treatment time by reintroduction of liquid from the levelling vessels 17, 18, the exposed, ready-soaked and preflushed straw being pushed upwardly over the rim of the container 1 by the raising of the liquid level. The ready-soaked and preflushed straw is removed from the container 1 with the aid of the conveying means 11 to the conveyor belt 12 where the straw, under run-off, is finally flushed with fresh water and/or recycled liquid from the spray nozzles 13 until the desired flushing degree has been obtained (about 1 to 1.5 g of NaOH per kg of soaked straw). If desired, the finished straw may in a subsequent step be enriched with nutrient by being treated, preferably sprayed with nutrient solution (not shown). The total sojourn time of the straw in the container 1 on an average amounts to about 48 hours.

The amount of fresh water which is supplied to the system through the spray nozzles 13 and which is about 5 times the weight of the supplied dry straw, is adjusted such that there is supplied only so much fresh water as corresponds to the liquid amount absorbed by the straw during the lye treatment. As a result one obtains a closed system in respect of the treatment liquids, that is, no liquid is discharged.

After the ready-soaked and preflushed straw has been discharged from the container 1 by the raising of the liquid level, the various process steps are repeated, as described above, by slightly lowering the liquid level, applying the grid 9, raising the liquid level up to the level 21, etc.

It was referred in the introduction to the present specification to the fact that by supplying an alkali solution to a vessel containing straw and by then allowing the solution to stand, there is formed in the solution a concentration gradient with upwardly decreasing alkali concentration, which at the lye treatment in the container 1 results in different concentrations of lye between the lower and the upper part of the container. To this comes the effect of the lye being fed into the lower part of the container and the flushing water being sprayed in the upper part of the container as well as the neutralizing effect of the straw during its passage through the container 1, whereby the difference in lye concentration between the lower and the upper part of the container is further intensified. A continuous lye gradient with successively decreasing lye concentration thus arises between the lower and the upper part of the container 1 so that the straw is first treated with strong lye of high lye concentration and then with an ever weaker lye as the straw rises in the container 1.

The lye gradient is influenced to some extent by withdrawal and the reintroduction of aqueous alkali solution with the aid of the levelling vessels 17, 18, but this influence is minimized by making the liquid amount withdrawn to each levelling vessel as small as possible. To this end, it is suitable for the apparatus to have two or more levelling vessels the outlets of which are disposed at different heights of the container 1 and preferably at the upper part of said container 1 so that the strong lye in the lower part thereof is left undisturbed. Moreover, the withdrawal and reintroduction of aqueous alkali solution by means of the levelling vessels is carried out such that withdrawal takes place first to the uppermost levelling vessel and last to the lowermost levelling vessel, whereas reintroduction takes place in the reverse order so that aqueous alkali solution is first reintroduced from the lowermost levelling vessel and last from the uppermost levelling vessel 17.

The straw may be supplied to the lye treatment container 1 in its normal air-dry state. Such dry straw, however, contains considerable quantities of air which have to be displaced by the aqueous alkali solution before the lye can begin to take effect. Moreover, the carbon dioxide of the trapped air consumes alkali under formation of carbonate. Before the straw is fed into the container 1 it is therefore suitable to soak the straw to displace the trapped air by liquid before the straw is put into the container 1. Said soaking may be done with fresh water, but as it is desirable to save the fresh water for the final flushing of the treated straw, the soaking preferably takes place with aqueous alkali solution which is suitably taken from the container 1. Thus, as already mentioned, the straw may first be soaked in a vessel with alkali solution of high concentration, whereupon the straw together with the intended quantity of alkali is fed into the bottom of the container 1 with the aid of the supplying means 2. The requisite supply of liquid and alkali in the soaking vessel preferably takes place respectively by supply of liquid from the container 1 and by addition of concentrated alkali (in solid form or as concentrated solution) to the soaking vessel.

The substances which during the lye treatment are dissolved from the straw can be removed from the treating liquid and collected in that a given portion of the treating solution is withdrawn from the container 1 and in that acid is added for precipitating the substances, whereupon the precipitate is separated, for example, by decanting and the purified solution is alkalized with lye and recycled to the container.

The treating solution is preferably withdrawn from the upper part of the container where the pH value is lower than that in the lower part and, as a consequence, a smaller amount of acid is required for the precipitation. For this reason, it may also be of advantage that the withdrawal and the reintroduction of the treating solution take place via the levelling vessels 17, 18, the outlets of which are preferably disposed at the upper part of the container 1.

The invention has been described in the foregoing with reference to a specially preferred embodiment, but it will readily be seen that variations can be resorted to within the scope of the invention without departing from the essential features thereof. As already indicated, the essential features of the invention reside in that the aqueous alkali solutions of different alkali content employed in the prior art have been replaced by a single aqueous alkali solution having an alkali gradient such that the alkali content is highest at the bottom of the aqueous alkali solution and lowest at the top of the aqueous alkali solution. A further essential feature of the invention is that it relates to a closed system in respect of the treated liquid, i.e. no polluting liquid is discharged from the system, and the liquid supplied is merely a replacement of the liquid absorbed by the straw.

## Claims

1. A method of treating fibrous plant material, such as straw, in which the plant material is treated with aqueous alkali solution and then flushed with water to remove excess alkali, characterised in that the plant material by its own buoyancy rises through a column of aqueous alkali solution having an alkali gradient such that the alkali content is highest at the bottom of the column and lowest at the top of the column.

2. A method as claimed in claim 1, characterized in that aqueous alkali solution of high concentration and plant material are supplied at the bottom of the column and that treated plant material is withdrawn at the top of the column.

3. A method as claimed in claim 1, characterized in that the level of the aqueous alkali solution is controlled by means of at least one levelling vessel.

4. A method as claimed in claim 3, characterized in that the plant material is treated with the aqueous alkali solution, that the level of the aqueous alkali solution is lowered by withdrawal of aqueous alkali solution, that the plant material thereby exposed is preflushed with flushing water, that the exposed plant material is withdrawn by supply of the withdrawn aqueous alkali solution for raising the level of the plant material, and that the plant material is removed and finally flushed with fresh water in a quantity corresponding to the liquid quantity absorbed by the plant material during the treatment.

5. A method as claimed in claim 2, characterized in that the aqueous alkali solution and the plant material are collectively supplied to the bottom of the column.

6. An apparatus for treating fibrous plant material, such as straw, with aqueous alkali solution and flushing of the treated plant material with fresh water to remove excess alkali as claimed in any one of the preceding claims, said apparatus comprising a substantially vertical container (1) which at its lower part has supply means for supplying plant material and aqueous alkali solution of high concentration and which at its upper part has a closure means (9) for closing the upper end of the container, flushing means (13, 16) for supplying fresh water and flushing water, and conveying means (11) for treated plant material, characterized in that the container (1) between the upper and the lower part thereof is provided with at least one levelling vessel (17, 18) for controlling the liquid level in the container between a lower and an upper position (22 and 21, respectively), by respectively withdrawal and supply of aqueous alkali solution.

## Patentansprüche

1. Verfahren zur Behandlung von faserhaltigem Pflanzenmaterial, wie Stroh, wobei das Pflanzenmaterial mit Alkali in wässriger Lösung behandelt und dann zwecks Entfernung des Alkaliüberschusses mit Wasser gewaschen wird, dadurch gekennzeichnet, dass das Pflanzenmaterial aus eigener Kraft durch eine Säule einer Alkalilösung nach oben strömt, deren Alkaligradient ein solcher ist, dass der Alkaligehalt am Boden der Säule am höchsten und an der Spitze der Säule am niedrigsten ist.

2. Verfahren nach Anspruch 1, dadurch gekennzeichnet, dass am Boden der Säule Alkalilösung hoher Konzentration und Pflanzenmaterial zugeführt werden, und dass behandeltes Pflanzenmaterial an der Spitze der Säule entnommen wird.

3. Verfahren nach Anspruch 1, dadurch gekennzeichnet, dass das Niveau der Alkalilösung mit mindestens einem Niveaugefäss eingeregelt wird.

4. Verfahren nach Anspruch 3, dadurch gekennzeichnet, dass das Pflanzenmaterial mit der Akalilösung behandelt wird, dass das Niveau der Alkalilösung durch Abzapfen von Alkalilösung gesenkt wird, dass das dabei freigelegte Pflanzenmaterial mit Waschwasser vorgewaschen wird, dass das freigelegte Pflanzenmaterial durch Zufuhr der abgezapften Alkalilösung zwecks Erhöhung des Niveaus des Pflanzenmaterials entnommen wird, und dass das Pflanzenmaterial entfernt und mit frischem Wasser in einer der vom Pflanzenmaterial während der Behandlung aufgenommenen Flüssigkeitsmenge entsprechenden Menge endgültig gewaschen wird.

5. Verfahren nach Anspruch 2, dadurch gekennzeichnet, dass die Alkalilösung und das Pflanzenmaterial gemeinsam dem Boden der Säule zugeführt werden.

6. Vorrichtung zur Behandlung von faserhaltigem Pflanzenmaterial, wie Stroh, mit Alkali in wässriger Lösung und Waschen des behandelten Pflanzenmaterials mit frischem Wasser zwecks Entfernung des Alkaliüberschusses, gemäss einem der vorhergehenden Ansprüche, wobei die Vorrichtung einen im wesentlichen senkrechten Behälter (1) umfasst, der an seinem unteren Teil Zuführmittel für Pflanzenmaterial und Alkalilösung hoher Konzentration und an seinem oberen Teil ein Absperrmittel (9) zum Abschliessen des oberen Endes hat, sowie Waschmittel (13, 16) zur Zufuhr von frischem Wasser und Waschwasser und Fördermittel (11) für behandeltes Pflanzenmaterial besitzt, dadurch gekennzeichnet, dass der Behälter (1) zwischen dem unteren und dem oberen Teil mit mindestens einem Niveaugefäss (17, 18) zur Einregelung des Flüssigkeitsniveaus im Behälter zwischen einer unteren und einer oberen Lage (22 bzw. 21) durch Abzapfen bzw. Zufuhr von Alkalilösung versehen ist.

## Revendications

1. Procédé de traitement de matière végétale fibreuse, telle que de la paille, dans lequel la matière végétale est traitée avec une solution aqueuse d'alcali et ensuite rincée avec de l'eau pour éloigner l'excédent d'alcali, caractérisé en ce que la matière végétale remonte par sa propre flottabilité à travers une colonne de solution aqueuse d'alcali ayant un gradient d'alcali qui est tel que la teneur en alcali est le plus élevée au fond de la colonne et le plus faible au sommet de la colonne.

2. Procédé selon la revendication 1, caractérisé en ce qu'une solution aqueuse d'alcali de haute concentration et de la matière végétale sont amenées au fond de la colonne, et que la matière végétale traitée est extraite au sommet de la colonne.

3. Procédé selon la revendication 1 ou 2, caractérisé en ce que le niveau de la solution aqueuse d'alcali est réglé à l'aide d'au moins un vase de nivellement.

4. Procédé selon l'une quelconque des revendications 1 à 3, caractérisé en ce que la matière végétale est traitée avec la solution aqueuse d'alcali, que le niveau de la solution aqueuse d'alcali est baissé par déchargement de solution aqueuse d'alcali, que la matière végétale ainsi exposée est prérincée avec de l'eau de rinçage, que la matière végétale exposée est extraite par apport de la solution aqueuse d'alcali déchargée pour élever le niveau de la matière végétale, et que la matière végétale est éloignée et finalement rincée avec de l'eau fraîche dans une quantité correspondant à la quantité liquide absorbée pendant le traitement par la matière végétale.

5. Procédé selon la revendication 2, caractérisé en ce que la solution aqueuse d'alcali et la matière végétale sont amenées ensemble au fond de la colonne.

6. Appareil de traitement de matière végétale fibreuse, telle que de la paille, avec une solution aqueuse d'alcali, et de rinçage de la matière végétale, traitée, avec de l'eau fraîche afin d'éloigner l'excédent d'alcali selon l'une quelconque des revendications précédentes, cet appareil comprenant un récipient sensiblement vertical (1) qui présente à sa partie inférieure des moyens d'amenée de matière végétale et de solution aqueuse d'alcali de haute concentration et qui présente à sa partie supérieure un moyen de fermeture (9) pour fermer l'extrémité supérieure, des moyens de rinçage (13, 16) pour amener de l'eau fraîche et de l'eau de rinçage, et des moyens de transport (11) pour matière végétale traitée, caractérisé en ce que le récipient (1) présente, entre les parties inférieure et supérieure, au moins un vase de nivellement (17, 18) pour régler le niveau liquide dans le récipient entre une position inférieure et une position supérieure (22 respectivement 21) par déchargement respectivement introduction de solution aqueuse d'alcali.